# FASCICULE DE BREVET EUROPEEN

(11) **EP 2 830 938 B1**
(45) Date de publication et mention de la délivrance du brevet: **09.03.2016**
(21) Numéro de dépôt: 13715315.1
(22) Date de dépôt: 14.03.2013
(51) Int. Cl.: B64C 25/40, B64D 41/00

(54) **DISPOSITIF D'ALIMENTATION ÉLECTRIQUE D'UN AÉRONEF AU SOL**
STROMVERSORGUNG FÜR EIN FLUZEUG AM BODEN
AIRCRAFT GROUND POWER SUPPLY SYSTEM

(30) Priorité: 30.03.2012 FR 1252957
(43) Date de publication de la demande: 04.02.2015
(73) Titulaire: Labinal Power Systems, 31700 Blagnac (FR)
(72) Inventeur: VIEILLARD, Sébastien, F-77720 La Chapelle Gauthier (FR); LE DUIGOU, Loïc, F-92120 Montrouge (FR)
(74) Mandataire: Pichat, Thierry
(86) Numéro de dépôt international: PCT/FR2013/050527
(87) Numéro de publication internationale: WO 2013/144479

(56) Documents cités:
- EP-A1- 2 243 703

## Description

La présente invention concerne un dispositif d'alimentation électrique d'un aéronef au sol, comportant au moins deux réseaux électriques : un réseau électrique d'aéronef, notamment pour l'alimentation de la cabine et du cockpit de l'aéronef, et un réseau de taxiage électrique.

Les demandes FR 10/55457 et FR 10/59612 de la demanderesse décrivent respectivement un dispositif d'alimentation du réseau électrique d'un aéronef, et une architecture électrique pour le traitement de l'énergie régénérée par des actionneurs électriques pendant des opérations de taxiage d'un aéronef.

Le taxiage d'un aéronef est la circulation ou le roulage de cet aéronef au sol, par l'intermédiaire des roues des trains d'atterrissage de l'aéronef. La taxiage est dit électrique lorsque les roues d'au moins un train d'atterrissage de l'aéronef (en général les roues des trains d'atterrissage principaux) sont entraînées par des moteurs électriques, qui font partie du réseau de taxiage.

Les réseaux d'aéronef et de taxiage sont alimentés par au moins un générateur entraîné par un groupe auxiliaire de puissance (ou APU, de l'anglais *Auxiliary Power Unit*).

Dans la technique actuelle, ce groupe auxiliaire de puissance est mis en route par l'intermédiaire d'un démarreur indépendant alimenté par une batterie, et comprend un arbre de sortie d'entraînement du générateur précité.

Plusieurs architectures électriques ont été proposées pour l'alimentation des réseaux d'aéronef et de taxiage, à partir de l'énergie fournie par le groupe auxiliaire de puissance.

Une première architecture électrique de la technique antérieure comprend deux générateurs électriques entraînés par le groupe auxiliaire de puissance. Le premier générateur fournit une tension alternative Vac1 (230V) au réseau de taxiage et le second générateur fournit une tension alternative Vac2 (115V) au réseau d'aéronef. Le réseau de taxiage comprend un boîtier électronique de puissance (appelé MCU, de l'anglais *Motor Control Unit*) pour le pilotage des moteurs électriques d'entraînement des roues de l'aéronef, qui est relié au premier générateur par des moyens de connexion/déconnexion.

L'avantage de cette architecture est que les réseaux de taxiage et d'aéronef sont indépendants l'un de l'autre et sont alimentés par des générateurs distincts. Les contraintes de validation pour la certification du réseau de l'aéronef (du type ATA 24) n'affectent donc pas le réseau de taxiage, qui peut comprendre un boîtier électronique de puissance simplifié, ce qui réduit la masse de ce boîtier (d'environ 50kg).

Toutefois, les deux générateurs précités ont des puissances électriques relativement importantes, respectivement de 120kVA et de 90kVA, qui s'ajoutent à la puissance électrique du démarreur du groupe auxiliaire de puissance. La puissance électrique embarquée dans l'aéronef est donc relativement importante. Du fait de leurs fortes puissances électriques, les générateurs sont lourds et encombrants, et il peut être difficile voire impossible de les monter sur l'arbre de sortie du groupe auxiliaire de puissance.

Dans une seconde architecture électrique de la technique antérieure, les réseaux d'aéronef et de taxiage sont alimentés par un générateur commun de forte puissance électrique (150kVA), qui est entraîné par le groupe auxiliaire de puissance. Ce générateur fournit une tension alternative Vac2 (115V) aux réseaux d'aéronef et de taxiage, qui sont reliés au générateur par des moyens de connexion/déconnexion. Le réseau de taxiage comprend un boîtier électronique de puissance relié aux moteurs électriques d'entraînement des roues de l'aéronef.

L'inconvénient de cette architecture électrique est que le réseau de taxiage doit répondre à l'ensemble des normes réseaux (du type ATA24 par exemple) applicables à l'aéronef et est alimenté par la tension Vac2 de 115V. Le boîtier électronique de puissance du réseau de taxiage comprend une fonction de conversion d'énergie permettant d'augmenter le niveau de tension sans polluer le réseau de l'aéronef. Cette fonction est en général assurée par un module ATRU (*Auto Transformer Rectifier Unit*), ce qui entraîne une augmentation significative du poids du boîtier (de l'ordre de 50 à 100kg).

On a également proposé, dans une autre architecture électrique connue, d'alimenter le réseau de taxiage d'un aéronef au moyen d'au moins un générateur entraîné par un moteur de l'aéronef, le réseau électrique d'aéronef étant alimenté par un autre générateur entraîné par un groupe auxiliaire de puissance. Cependant, cette architecture oblige à faire fonctionner un moteur, ce qui entraîne une réduction significative des gains de consommation en kérosène attendus pour la fonction taxiage électrique d'un aéronef.

L'invention a notamment pour but de réduire ou d'éliminer de façon simple, efficace et économique au moins une partie des inconvénients précités de la technique antérieure, grâce à une nouvelle architecture électrique pour le taxiage électrique d'un aéronef.

Elle propose à cet effet un dispositif d'alimentation électrique d'un aéronef au sol, comportant deux générateurs électriques entraînés par un groupe auxiliaire de puissance, le premier générateur étant destiné à alimenter un réseau de taxiage électrique comprenant des moteurs électriques d'entraînement de roues de l'aéronef, et le second générateur étant destiné à alimenter un réseau électrique d'aéronef, caractérisé en ce que le premier générateur est relié par des moyens de connexion/déconnexion sélective aux réseaux d'aéronef et de taxiage, pour fournir une première tension alternative Vac2 au réseau d'aéronef lorsqu'il est connecté à ce réseau, ou une tension alternative plus importante Vac1 ou une puissance P au réseau de taxiage lorsqu'il est connecté à ce réseau, et en ce que le second générateur est relié par des moyens de connexion/déconnexion sélective aux réseaux d'aéronef et de taxiage et est apte à fournir ladite tension alternative Vac2 au réseau auquel il est connecté.

Dans le dispositif selon l'invention, le premier générateur entrainé par le groupe auxiliaire de puissance est utilisé pour alimenter le réseau de taxiage lorsque l'aéronef doit rouler au sol, et pour alimenter le réseau d'aéronef lorsque le réseau de taxiage n'est pas alimenté. Ce premier générateur dit « hybride » est capable de fournir sélectivement une tension Vac1 d'alimentation du réseau de taxiage ou une tension Vac2 d'alimentation du réseau d'aéronef. En variante, le premier générateur peut fournir sélectivement une puissance P d'alimentation du réseau de taxiage, ou une tension Vac2 d'alimentation du réseau d'aéronef. Le second générateur est utilisé pour alimenter le réseau d'aéronef lorsque le premier générateur alimente le réseau de taxiage électrique. Ce deuxième générateur est avantageusement dimensionné pour fournir uniquement des besoins à l'avion au sol, ce qui permet de réduire la puissance électrique embarquée et donc le volume installé dans l'avion. Les moyens de connexion/déconnexion sont pilotés pour relier, pendant le taxiage, le premier générateur au réseau de taxiage (pour son alimentation en tension Vac1 ou en puissance P) et le second générateur au réseau d'aéronef (pour son alimentation en tension Vac2), et pour relier, pendant les autres phases de fonctionnement de l'aéronef, le premier générateur au réseau d'aéronef pour son alimentation en tension Vac2, le second générateur étant alors à l'arrêt.

Selon une caractéristique de l'invention, le deuxième générateur est utilisé pour alimenter le réseau de taxiage lorsque le premier générateur est défectueux ou est en panne. Il y a ainsi redondance des moyens d'alimentation électrique du réseau de taxiage. Les moyens de connexion/déconnexion sont pilotés pour relier le second générateur au réseau de taxiage (pour son alimentation en tension Vac2) lorsqu'une défaillance du premier générateur est détectée, par exemple par son moyen de contrôle du type GCU (de l'anglais *Generator Control Unit*).

Dans le cas précité, le réseau de taxiage est alimenté avec la tension Vac2 qui est inférieure à la tension Vac1. Bien que la puissance fournie par le second générateur puisse ne pas être suffisante pour une utilisation optimale du taxiage, elle est toutefois suffisante pour notamment assurer la fonction marche arrière du taxiage, qui ne nécessite par une puissance relativement importante. L'invention permet ainsi d'assurer la disponibilité de la fonction marche arrière du réseau de taxiage, même en cas de panne de son générateur principal. La fiabilité de la fonction taxiage n'est plus ainsi limité par la fiabilité de son générateur principal, car un générateur secondaire reste disponible pour alimenter le réseau taxiage.

L'invention permet de concevoir le réseau de taxiage sans les contraintes imposées par les normes applicables au réseau propre à l'aéronef du type ATA 24 et de réduire les contraintes de pollution harmonique associée à la fonction taxiage.

Selon une autre caractéristique de l'invention, un des deux générateurs est un générateur/démarreur apte à démarrer le groupe auxiliaire de puissance et peut remplacer ainsi le démarreur indépendant utilisé dans la technique antérieure, ce qui représente un gain de poids significatif. De plus, ce générateur/démarreur est monté sur le groupe auxiliaire de puissance à la place du démarreur (c'est-à-dire sur le pignon du groupe généralement dédié au démarreur de la technique antérieure) et ne gêne donc pas le montage de l'autre générateur sur l'arbre de sortie du groupe auxiliaire de puissance.

Le dispositif selon l'invention comprend également un boîtier électronique de puissance qui est relié au générateur/démarreur pour le pilotage du démarrage du groupe auxiliaire de puissance. Ce boîtier peut comprendre des moyens de commande du type GCU (de l'anglais *Generator Control Unit*) qui régulent le courant ou la tension de sortie du générateur/démarreur et le protègent en cas de surcharge électrique.

Le premier générateur est de préférence un générateur synchrone à trois étages à excitation rotorique bobinée. La variation de l'excitation rotorique permet soit de faire varier la tension de sortie du générateur, entre les valeurs Vac1 et Vac2, soit de passer d'un générateur de tension (délivrant une tension alternative Vac2 sensiblement constante) à un générateur de courant/puissance délivrant un courant ou une puissance, en fonction du besoin de taxiage sensiblement constant, par exemple une puissance de 150kW.

Le premier générateur peut fournir une tension de 115Vac(Vac2) et une puissance de 90kVA lorsqu'il est connecté au réseau d'aéronef ou une tension de 230Vac(Vac1) et une puissance de 150kW (cas d'un générateur régulé en tension ou en puissance) lorsqu'il est connecté au réseau de taxiage.

Le second générateur peut fournir une puissance électrique suffisante pour alimenter l'aéronef au sol, et une tension Vac2 de 115V à 400Hz. Le second générateur est alors dimensionner pour couvrir le besoin électrique au sol de l'aéronef et non plus sur tout le cycle de vol. La puissance électrique embarquée dans l'aéronef pour son fonctionnement au sol est donc nettement inférieure à celle utilisée dans la technique antérieure, décrite ci-dessus. Par ailleurs, du fait de sa faible puissance électrique, le second générateur est peu encombrant et peut être entraîné avec le premier générateur par l'arbre de sortie du groupe auxiliaire de puissance. La puissance (transitoire ou non) du second générateur est toutefois suffisante pour assurer la fonction marche arrière du réseau de taxiage.

La présente invention concerne également un procédé d'alimentation électrique d'un aéronef au sol, au moyen d'un dispositif tel que décrit ci-dessus, caractérisé en ce qu'il comprend une étape consistant à alimenter le réseau de taxiage au moyen du premier générateur et le réseau d'aéronef au moyen du second générateur, et une étape consistant à alimenter le réseau d'aéronef au moyen du premier générateur quand la fonction de taxiage n'est pas utilisée, le second générateur étant alors hors service.

Avantageusement, le premier générateur est un générateur synchrone à trois étages à excitation rotorique bobinée, et l'excitation de ce générateur est commandée par un boîtier électronique de puissance pour passer d'un générateur de tension Vac1 à un générateur de tension Vac2 ou d'un générateur de puissance P à un générateur de tension Vac2.

Le procédé comprend de préférence une étape consistant à alimenter le réseau de taxiage par le second générateur quand le premier générateur est défectueux.

L'invention sera mieux comprise et d'autres caractéristiques, détails et avantages de celle-ci apparaîtront plus clairement à la lecture de la description qui suit, faite à titre d'exemple non limitatif et en référence aux dessins annexés, dans lesquels :
- les figures 1 et 2 représentent chacune de manière schématique un dispositif d'alimentation électrique d'un aéronef selon la technique antérieure ;
- la figure 3 représente de manière schématique un dispositif d'alimentation électrique d'un aéronef selon la présente invention ;
- les figures 3a, 3b et 3c représentent de manière schématique des moyens de connexion/déconnexion du dispositif selon l'invention, et illustrent des étapes du procédé selon l'invention d'alimentation des réseaux de taxiage et de l'aéronef, du réseau d'aéronef, et du réseau de taxiage, respectivement ;
- la figure 4 représente de manière schématique un générateur synchrone à trois étages à excitation rotorique bobinée selon l'invention ; et
- les figures 5 et 6 représentent de manière schématique des variantes de réalisation du dispositif d'alimentation électrique selon l'invention.

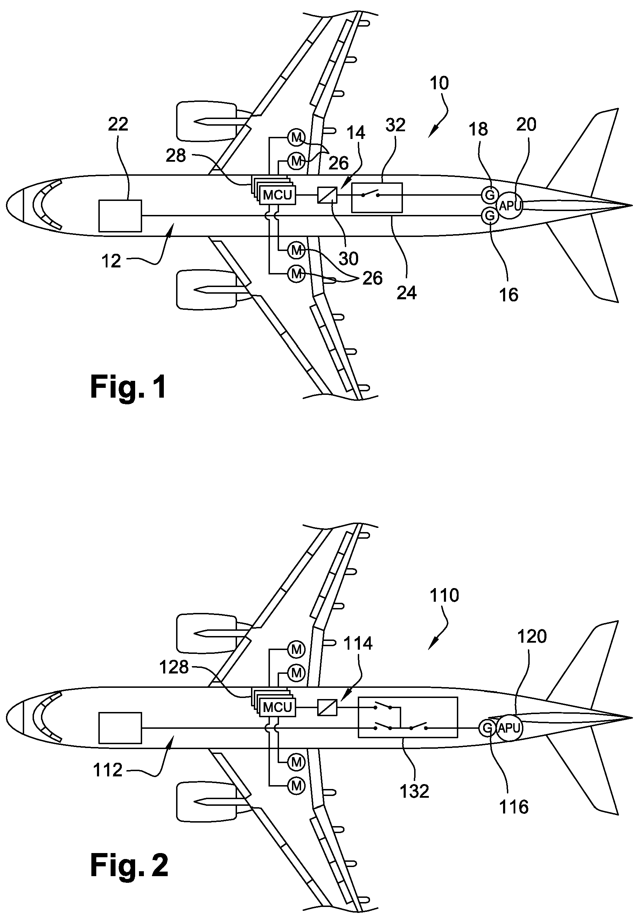

On se réfère d'abord à la figure 1 qui représente un aéronef équipé d'un dispositif 10 de la technique antérieure pour l'alimentation électrique d'un réseau 12 d'aéronef, notamment pour l'alimentation d'équipements des cabines de pilotage et des passagers de l'aéronef, et d'un réseau 14 de taxiage électrique.

Chaque réseau 12, 14 est alimenté par un générateur électrique 16, 18 entraîné par un groupe auxiliaire de puissance 20, désigné par l'acronyme APU (*Auxiliary Power Unit*) dans ce qui suit.

L'APU 20 est situé à l'arrière du fuselage de l'aéronef et comprend un arbre de sortie (non représenté) d'entraînement des rotors des générateurs 16, 18. L'APU 20 est équipé d'un démarreur (non représenté) indépendant, qui est relié à une batterie et à des moyens de pilotage du démarrage de l'APU.

Le générateur 16 a une puissance électrique de 90kVA et fournit une tension alternative Vac2 de 115v au réseau 12, ce dernier étant schématiquement représenté en figure 1 par un boîtier de distribution primaire 22 reliée par un harnais électrique 24 au générateur 16.

Le générateur 18 a une puissance électrique de 120kVA et fournit une tension alternative Vac1 de 230v au réseau de taxiage 14, qui est schématiquement représenté par quatre moteurs (M) 26, reliés à un boîtier électronique de puissance (MCU, de l'anglais *Motor Control Unit*) 28, qui est lui-même relié par un redresseur 30 au générateur 18. La sortie du générateur 18 est reliée au réseau de taxiage 14 par des moyens 32 de connexion/déconnexion qui permettent d'isoler le générateur du réseau de taxiage 14 lorsque la fonction taxiage n'est pas recherchée, par exemple lorsque l'aéronef est en vol.

Cette architecture électrique présente les inconvénients décrits plus haut, qui sont principalement dus aux puissances électriques relativement importantes des générateurs 16, 18 (respectivement de 90kVA et de 120kVA), à leur poids et à leur encombrement.

La figure 2 représente un aéronef équipé d'un autre dispositif 110 de la technique antérieure pour l'alimentation électrique du réseau 112 d'aéronef et du réseau de taxiage 114.

Les réseaux 112, 114 sont alimentés par un générateur électrique commun 116 qui est entraîné par un APU 120.

La sortie du générateur 116 est reliée aux réseaux 112, 114 par des moyens 132 de connexion/déconnexion et fournit à ces réseaux une tension alternative Vac2 de 115v.

Le boîtier électronique de puissance (MCU) 128 du réseau de taxiage 114 comprend un module ATRU (*Auto Transformer Rectifier Unit*) de conversion d'énergie permettant d'augmenter le niveau de tension fourni par le générateur 116.

Cette autre architecture électrique présente également des inconvénients, qui sont principalement dus au fait que le module ATRU entraîne une augmentation significative du poids du boîtier électronique de puissance (MCU) 128, et que le réseau de taxiage 114 doit répondre à l'ensemble des standards de certification applicables au réseau 112 d'aéronef 12 (du type ATA 24).

L'invention permet de remédier à au moins une partie des inconvénients des techniques antérieures grâce à l'alimentation du réseau de taxiage et du réseau propre à l'aéronef au moyen de deux générateurs, dont un est « hybride », chacun de ces générateurs permettant d'alimenter de façon sélective ces deux réseaux.

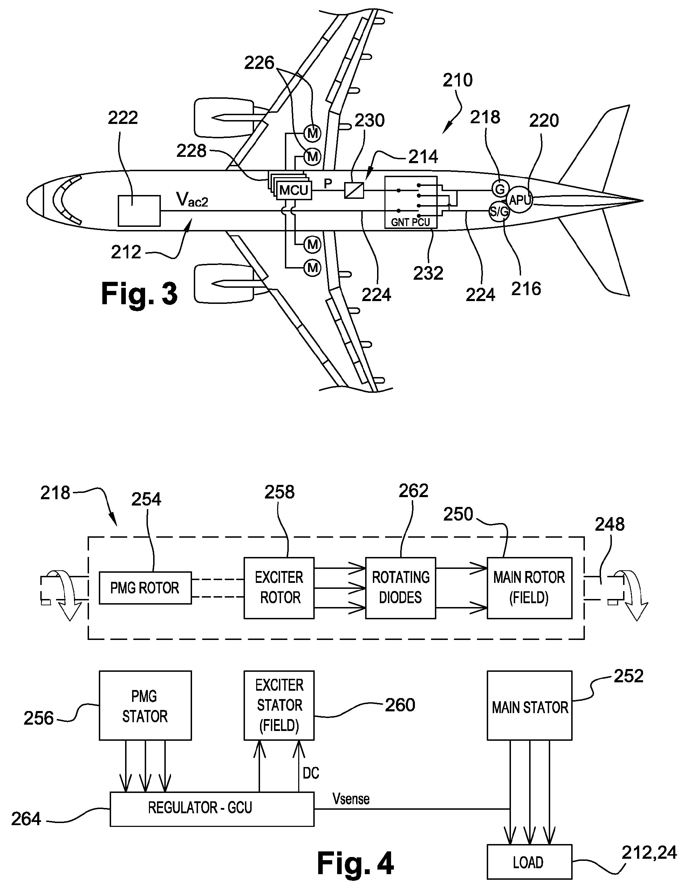

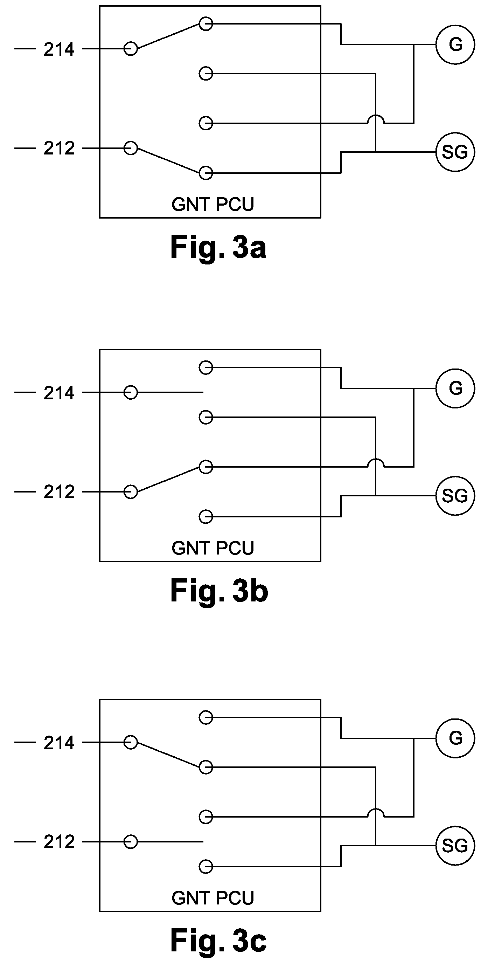

La figure 3 représente un mode préféré de réalisation du dispositif 210 selon l'invention, dans lequel un APU 220, situé à l'arrière du fuselage d'un aéronef, entraîne les rotors de deux générateurs électriques 216, 218 indépendants.

La sortie du générateur 216 est reliée par des moyens 232 de connexion/déconnexion à l'entrée d'un boîtier de distribution primaire 222 du réseau d'aéronef, la ou les sorties de ce boîtier 222 étant par exemple reliées à des équipements du cockpit et à différents compartiments du fuselage de l'aéronef. Les liaisons électriques entre le boîtier 222, les moyens 232 et le générateur 216 sont établies par des harnais électriques 224.

Le générateur 216 a une puissance électrique comprise entre 30 et 40kVA et fournit aux réseaux 212, 214 d'aéronef et de taxiage une tension alternative Vac2, qui est par exemple de 115V à 400Hz.

La sortie du générateur 218 est reliée par des moyens 232 de connexion/déconnexion à l'entrée d'un redresseur 230 du réseau de taxiage, la sortie du redresseur 230 étant reliée à l'entrée d'un boîtier électronique de puissance (MCU) 228 qui alimente des moteurs 226 d'entraînement des roues des trains d'atterrissage principaux de l'aéronef. Ces moteurs 226 peuvent être au nombre de quatre.

Dans l'exemple représenté, les moyens 232 de connexion/déconnexion des générateurs 216, 218 aux réseaux 212, 214 sont formés par un boîtier GNTPCU (*Green Taxiing Power Control Unit*) commun comportant des contacteurs ou analogues aptes à établir des liaisons électriques entre le générateur 218 et le réseau de taxiage 214, entre le générateur 218 et le réseau d'aéronef 212, entre le générateur 216 et le réseau d'aéronef 212, et entre le générateur 216 et le réseau de taxiage 214. Le boîtier GNTPCU permet de gérer les configurations électriques de l'aéronef au moyen des contacteurs et comprend en outre au moins une carte du type GCU (*Generator Control Unit*) pour piloter l'excitation du générateur 218, comme cela sera décrit dans ce qui suit.

Le générateur 218 a une puissance électrique de l'ordre de 90kVA par exemple et est apte à alimenter le réseau de taxiage 214 et le réseau d'aéronef 212.

Lorsque la fonction taxiage n'est pas utilisée, la sortie du générateur 218 est reliée par les moyens 232 au réseau d'aéronef 212 et fournit à ce réseau une tension alternative Vac2, qui est par exemple de 115v à 400Hz. La sortie du générateur 218 peut être déconnectée du réseau de taxiage 214 par l'intermédiaire des moyens 232. La sortie du générateur 216 peut également être déconnectée du réseau 212 par l'intermédiaire des moyens 232. Les contacteurs du boîtier GNTPCU sont alors dans les positions telles que représentées dans la figure 3b.

Lorsque la fonction taxiage doit être utilisée, la sortie du générateur 216 est reliée par les moyens 232 au réseau d'aéronef 212 et fournit à ce réseau une tension alternative Vac2, qui est par exemple de 115v à 400Hz. La sortie du générateur 218 est reliée par les moyens 232 au réseau de taxiage 214 et fournit à ce réseau une tension alternative Vac1, qui est par exemple de 230v à 400Hz, ou une puissance P, qui est par exemple de 150kW à 230v. Les contacteurs du boîtier GNTPCU sont alors dans les positions telles que représentées dans la figure 3a.

Lorsque la fonction de taxiage doit être utilisée mais que le générateur 218 est en panne ou est défectueux, la sortie du générateur 216 est reliée par les moyens 232 au réseau de taxiage 214 et fournit à ce réseau la tension alternative Vac2. Cette tension est suffisante pour contrôler la fonction marche arrière du réseau de taxiage. La sortie du générateur 218 peut être déconnectée du réseau de taxiage 214 par l'intermédiaire des moyens 232. Les contacteurs du boîtier GNTPCU sont alors dans les positions telles que représentées dans la figure 3c.

Le redresseur 230 est du type AC/DC et permet de convertir la tension alternative Vac1 en tension continue Vdc1 ou la tension Vac2 en tension continue Vdc2. Le boîtier MCU 228 peut comprendre des contacteurs et au moins un convertisseur d'énergie comportant chacun un ou plusieurs onduleurs. De façon avantageuse, ces onduleurs fonctionnent simplement en mode aiguilleur de courant lorsque le générateur 218 fournit un courant ou une puissance au réseau de taxiage 214.

Le générateur 216 est de préférence un générateur/démarreur (S/G), qui peut être utilisé en mode « moteur » quand on lui fournit de l'énergie, pour démarrer l'APU 220. Ceci permet de supprimer le démarreur qui était dédié au démarrage de l'APU dans la technique antérieure. Le générateur 216 de faible puissance est monté sur l'APU 220 à la place du démarreur d'origine, ce qui permet de ne pas gêner l'implantation du générateur 218 sur l'arbre de sortie de l'APU 220.

En variante, c'est le générateur 218 qui est utilisé pour démarrer l'APU 220. Le générateur 218, qui est apte à fournir de façon sélective deux tensions Vac1 et Vac2 ou une tension Vac2 et une puissance P, est avantageusement un générateur synchrone à trois étages à excitation rotorique bobinée, dont le principe de fonctionnement est schématiquement représenté en figure 4.

Le générateur 218 comporte un rotor principal bobiné 250 entraîné par l'arbre de sortie 248 de l'APU à l'intérieur d'un stator principal bobiné 252. Le générateur 218 est du type à trois étages (trois ensembles rotor/stator) et comprend en plus de l'ensemble rotor principal 250 / stator principal 252, un rotor 254 et un stator 256 à aimants permanents et un rotor 258 et un stator 260 d'une excitatrice, les rotors 254, 258 à aimants permanents et de l'excitatrice étant solidaires de l'arbre de sortie 248 de l'APU.

La sortie du rotor 258 de l'excitatrice est reliée à l'entrée d'un redresseur à diodes 262, qui est solidaire de l'arbre 248, et dont la sortie est reliée à l'entrée du rotor principal 250.

L'entrée du stator 260 de l'excitatrice et la sortie du stator 256 à aimants permanents sont reliées à des moyens 264 de régulation et de commande comportant au moins une carte GCU qui régule le courant ou la tension du générateur 218 et le protège en cas de surcharge électrique. Ces moyens 264 sont également reliés à la sortie du stator principal 252 et comprennent des moyens de détection de la tension ou du courant délivré aux réseaux 212, 214 de l'aéronef. Les moyens 264 peuvent être logés dans le boîtier GNTPCU.

Le générateur 218 peut ainsi fonctionner de la façon suivante.

L'arbre de sortie 248 de l'APU 220 entraîne le rotor principal 250 du générateur 218 à une vitesse prédéterminée. Les moyens 264 de régulation et de commande régulent l'alimentation du stator 260 de l'excitatrice de façon à générer un champ magnétique induisant un courant dans le rotor 258 de l'excitatrice, ce courant sortant du rotor 258 et étant redressé par le redresseur 262 avant d'alimenter le rotor principal 250 pour induire une tension ou un courant donné dans le stator principal 252 du troisième étage du générateur. Le rotor 254 et le stator 256 à aimants permanents permettent notamment de signaler aux moyens 264 la vitesse de rotation de l'arbre 248.

Le rotor principal 250 induit un courant ou une tension dans le stator principal 252 qui est destiné à alimenter l'un ou l'autre des réseaux 212, 214 précités. Les moyens 264 pilotent l'excitation du générateur 218 en fonction de la tension ou du courant détecté en sortie de ce générateur, de façon à ce que ce dernier délivre une tension définie (VAc1 ou Vac2) sensiblement constante ou possiblement variable pour alimenter notamment le réseau de taxiage et soit assimilable à un générateur de tension, ou délivre un courant ou une puissance sensiblement constant et soit assimilable à un générateur de courant/puissance pour alimenter notamment le réseau de taxiage.

La variation de l'excitation du générateur 218 permet de passer d'un mode de régulation de tension Vac2 (pour l'alimentation du réseau 212 en Vac2, par exemple de 115V) à un mode de régulation de puissance P (pour l'alimentation du réseau 214 en puissance P, par exemple de 150kW), ou d'un mode de régulation de tension Vac2 (pour l'alimentation du réseau 212 en Vac2, par exemple de 115V) à un mode de régulation de tension Vac1 (pour l'alimentation du réseau 214 en tension Vac1, par exemple de 230V).

Le générateur 218 fournit de préférence une tension de 115Vac et une puissance de 90kVA lorsqu'il est connecté au réseau d'aéronef, et une puissance de 150KW lorsqu'il est connecté au réseau de taxiage.

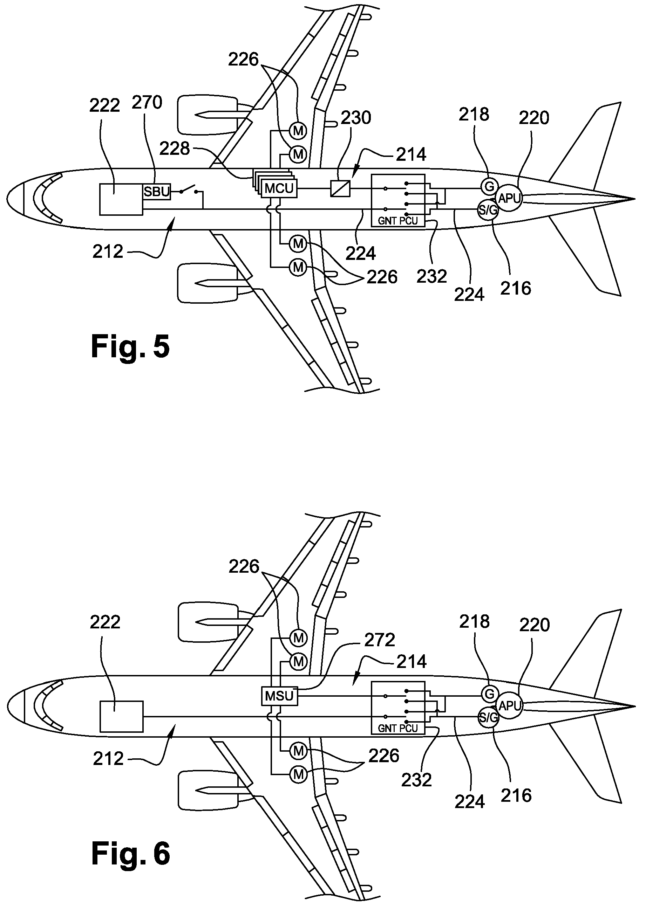

Dans la variante de réalisation de la figure 5, un boîtier électronique de puissance 270 du type SBU (*Starter Box Unit*) est branché sur le harnais 224, en parallèle du boîtier 222. Ce boîtier 270 est utilisé pour piloter le démarrage de l'APU 220 par l'intermédiaire du générateur/démarreur 216 ou 218. Dans ce cas, les logiques de pilotage des contacteurs du boîtier GNTPCU (moyens 232) peuvent être adaptées en conséquence.

La variante de réalisation de la figure 6 diffère de celle de la figure 4 en ce que le boîtier MCU est remplacé par un boîtier MSCU ou MSU 272 (*Motor Starter Unit*). Ce boîtier MSU 272 intègre une partie de l'électronique de puissance du boîtier GNTPCU pour piloter le démarrage de l'APU 220 par l'intermédiaire du générateur/démarreur 216 ou 218.

Le système électrique de démarrage de l'APU qui est utilisé dans la présente invention peut être du type de celui décrit dans la demande WO-A2-2010/079308 de la demanderesse

Dans encore une autre variante non représentée, le réseau de taxiage comprend un nombre de moteurs (M) 226 différent de quatre, et par exemple de deux.

## Revendications

1. Dispositif (210) d'alimentation électrique d'un aéronef au sol, comportant deux générateurs électriques (216, 218) entraînés par un groupe auxiliaire de puissance (220), le premier générateur étant destiné à alimenter un réseau (214) de taxiage électrique comprenant des moteurs électriques (226) d'entraînement de roues de l'aéronef, et le second générateur étant destiné à alimenter un réseau électrique (212) d'aéronef, **caractérisé en ce que** le premier générateur est relié par des moyens de connexion/déconnexion sélective (232) aux réseaux d'aéronef et de taxiage, et est apte à fournir une première tension alternative Vac2 au réseau d'aéronef lorsqu'il est connecté à ce réseau, ou une tension alternative plus importante Vac1 ou une puissance P au réseau de taxiage lorsqu'il est connecté à ce réseau, et **en ce que** le second générateur est relié par des moyens de connexion/déconnexion sélective (232) aux réseaux d'aéronef et de taxiage et est apte à fournir la première tension alternative Vac2 au réseau auquel il est connecté.

2. Dispositif selon la revendication 1, **caractérisé en ce que** l'un des générateurs (216, 218) est un générateur/démarreur apte à démarrer le groupe auxiliaire de puissance (220).

3. Dispositif selon la revendication 2, **caractérisé en ce qu'**il comprend un boîtier électronique de puissance (228, 270, 272) relié au générateur/démarreur (216, 218) pour le pilotage du démarrage du groupe auxiliaire de puissance (220).

4. Dispositif selon l'une des revendications précédentes, **caractérisé en ce que** le premier générateur (218) est un générateur synchrone à trois étages à excitation rotorique bobinée.

5. Dispositif selon l'une des revendications précédentes, **caractérisé en ce que** le premier générateur (218) fournit une tension de 115Vac(Vac2) à 400Hz et une puissance de 90kVA lorsqu'il est connecté au réseau d'aéronef.

6. Dispositif selon l'une des revendications précédentes, **caractérisé en ce que** le premier générateur (218) fournit une puissance de 150kW lorsqu'il est connecté au réseau de taxiage.

7. Dispositif selon l'une des revendications précédentes, **caractérisé en ce que** le second générateur (216) fournit une puissance électrique d'alimentation de charges électriques de l'aéronef au sol, et une tension Vac2 de 115Vac à 400Hz.

8. Procédé d'alimentation électrique d'un aéronef au sol au moyen d'un dispositif (210) selon l'une des revendications précédentes, **caractérisé en ce qu'**il comprend une étape consistant à alimenter le réseau de taxiage (214) par le premier générateur (218) et le réseau d'aéronef (212) au moyen du second générateur (216) et une étape consistant à alimenter le réseau d'aéronef (212) au moyen du premier générateur (218) quand la fonction de taxiage n'est pas utilisée, le second générateur (216) étant alors hors service.

9. Procédé selon la revendication 8, **caractérisé en ce que** le premier générateur (218) est un générateur synchrone à trois étages à excitation rotorique bobinée, et **en ce que** l'excitation de ce générateur est commandée par un boîtier électronique de puissance (232) pour passer d'un générateur de tension Vac1 à un générateur de tension Vac2 ou d'un générateur de puissance P à un générateur de tension Vac2.

10. Procédé selon la revendication 8 ou 9, **caractérisé en ce qu'**il comprend une étape consistant à alimenter le réseau de taxiage (214) par le second générateur (216) quand le premier générateur (218) est défectueux.

## Patentansprüche

1. Stromversorgungsvorrichtung (210) eines Luftfahrzeugs am Boden, umfassend zwei Stromgeneratoren (216, 218), die durch ein Hilfsaggregat (220) angetrieben sind, wobei der erste Generator zur Versorgung eines elektrischen Taxiingnetzes (214) bestimmt ist, das Elektromotoren (226) zum Antrieb der Räder des Luftfahrzeugs umfasst, und der zweite Generator zur Versorgung des Stromnetzes (212) des Luftfahrzeugs bestimmt ist, **dadurch gekennzeichnet, dass** der erste Generator durch selektive Anschluss- / Lösemittel (232) an die Luftfahrzeug- und Taxiingnetze angeschlossen ist und geeignet ist, eine erste Wechselspannung Vac2 für das Luftfahrzeugnetz zu liefern, wenn es an dieses Netz angeschlossen ist, oder eine höhere Wechselspannung Vac1 oder eine Leistung P an das Taxiingnetz, wenn es an dieses Netz angeschlossen ist, und dass der zweite Generator durch selektive Anschluss- / Lösemittel (232) an die Luftfahrzeug- und Taxiingmittel angeschlossen ist und geeignet ist, die erste Wechselspannung Vac2 an das Netz zu liefern, an das es angeschlossen ist.

2. Vorrichtung gemäß Anspruch 1, **dadurch gekennzeichnet, dass** einer der Generatoren (216, 218) ein Generator / Starter ist, der geeignet ist, das Hilfsaggregat (220) zu starten.

3. Vorrichtung gemäß Anspruch 2, **dadurch gekennzeichnet, dass** sie einen elektrischen Leistungskasten (228, 270, 272) umfasst, der an den Generator / Starter (216, 218) für das Steuern des Starts des Hilfsaggregats (220) angeschlossen ist.

4. Vorrichtung gemäß einem der voranstehenden Ansprüche, **dadurch gekennzeichnet, dass** der erste Genera tor (218) ein synchroner Generator mit drei Stufen mit gespulter Rotorerregung ist.

5. Vorrichtung gemäß einem der voranstehenden Ansprüche, **dadurch gekennzeichnet, dass** der erste Generator (218) eine Spannung von 115 Vac (Vac2) von 400 Hz und eine Leistung von 90 kVA liefert, wenn er an das Luftfahrzeugnetz angeschlossen ist.

6. Vorrichtung gemäß einem der voranstehenden Ansprüche, **dadurch gekennzeichnet, dass** der erste Generator (218) eine Leistung von 150 kW liefert, wenn er an das Taxiingnetz angeschlossen ist.

7. Vorrichtung gemäß einem der voranstehenden Ansprüche, **dadurch gekennzeichnet, dass** der zweite Generator (216) eine elektrische Versorgungsleistung elektrischer Ladungen des Luftfahrzeugs am Boden und eine Spannung Vac2 von 115 Vac von 400 Hz liefert.

8. Stromversorgungsverfahren eines Luftfahrzeugs am Boden mittels einer Vorrichtung (210) gemäß einem der voranstehenden Ansprüche, **dadurch gekennzeichnet, dass** es eine Stufe umfasst, die aus der Versorgung des Taxiingnetzes (214) durch den ersten Generator (218) und des Luftfahrzeugnetzes (212) mittels des zweiten Generators (216) besteht, und eine Stufe, die in der Versorgung des Luftfahrzeugnetzes (212) mittels des ersten Generators (218) besteht, wenn die Taxiingfunktion nicht verwendet wird, wobei der zweite Generator (216) dann außer Betrieb ist.

9. Verfahren gemäß Anspruch 8, **dadurch gekennzeichnet, dass** der erste Generator (218) ein synchroner Generator mit drei Stufen mit gespulter Rotorerregung ist und dass die Erregung dieses Generators durch einen elektronischen Leistungskasten (232) gesteuert ist, um von einem Generator mit einer Spannung Vac1 auf einen Generator mit einer Spannung Vac2 oder von einem Generator mit einer Leistung P auf einen Generator mit einer Leistung Vac2 überzugehen.

10. Verfahren gemäß Anspruch 8 oder 9, **dadurch gekennzeichnet, dass** er eine Stufe umfasst, die in der Versorgung des Taxiingnetzes (214) durch den zweiten Generator (216) besteht, wenn der erste Generator (218) ausgefallen ist.

## Claims

1. Device (210) for supplying electrical power to an aircraft on the ground, comprising two electric generators (216, 218) driven by an auxiliary power unit (220), the first generator being intended to supply an electric taxiing network (214) that comprises electric motors (226) for driving the wheels of the aircraft, and the second generator being intended to supply an electric aircraft network (212), **characterised in that** the first generator is connected by selective connection/disconnection means (232) to the aircraft and taxiing networks, and is able to supply a first AC voltage Vac2 to the aircraft network when it is connected to this network, or a higher AC voltage Vac1 or a power P to the taxiing network when it is connected to this network, and **in that** the second generator is connected by selective connection/disconnection means (232) to the aircraft and taxiing networks and is able to supply the first AC voltage Vac2 to the network to which it is connected.

2. Device according to claim 1, **characterised in that** one of the generators (216, 218) is a starter/generator able to start the auxiliary power unit (220).

3. Device according to claim 2, **characterised in that** it comprises a motor control unit (228, 270, 272) connected to the starter/generator (216, 218) for the controlling of the starting of the auxiliary power unit (220).

4. Device according to one of the preceding claims, **characterised in that** the first generator (218) is a three-stage synchronous generator with wound rotor excitation.

5. Device according to one of the preceding claims, **characterised in that** the first generator (218) supplies a voltage of 115Vac (Vac2) at 400Hz and a power of 90kVA when it is connected to the aircraft network.

6. Device according to one of the preceding claims, **characterised in that** the first generator (218) provides a power of 150kW when it is connected to the taxiing network.

7. Device according to one of the preceding claims, **characterised in that** the second generator (216) supplies an electric power for supplying electric charges to an aircraft on the ground, and a voltage Vac2 of 115Vac at 400Hz.

8. Method for supplying electrical power to an aircraft on the ground by means of a device (210) according to one of the preceding claims, **characterised in that** it comprises a step consisting in supplying the taxiing network (214) by the first generator (218) and the aircraft network (212) by means of the second generator (216) and a step consisting in supplying the aircraft network (212) by means of the first generator (218) when the taxiing function is not used, with the second generator (216) then being out of service.

9. Method according to claim 8, **characterised in that** the first generator (218) is a three-stage synchronous generator with wound rotor excitation, and **in that** the excitation of this generator is controlled by a motor control unit (232) in order to switch from a voltage generator Vac1 to a voltage generator Vac2 or from a generator of power P to a voltage generator Vac2.

10. Method according to claim 8 or 9, **characterised in that** it comprises a step consisting in supplying the taxiing network (214) by the second generator (216) when the first generator (218) is defective.
